# EUROPEAN PATENT APPLICATION

(11) **EP 2 789 950 A1**
(43) Date of publication of application: **15.10.2014**
(21) Application number: 12855017.5
(22) Date of filing: 14.11.2012
(51) Int. Cl.: F25D 23/06, C09J 5/06, C09J 175/04, F25D 25/00

(54) **REFRIGERATOR**

(30) Priority: 07.12.2011 JP 2011268129
(71) Applicant: Kabushiki Kaisha Toshiba, Minato-ku Tokyo 105-8001 (JP); Toshiba Home Appliances Corporation, Tokyo 101-0021 (JP)
(72) Inventor: YOSHIDA, Takaaki, Tokyo, 105-8001 (JP); SAEKI, Tomoyasu, Tokyo, 105-8001 (JP); ISHIBASHI, Ikuo, Tokyo, 105-8001 (JP)
(74) Representative: Granleese, Rhian Jane
(86) International application number: PCT/JP2012/007292
(87) International publication number: WO 2013/084415

(57) **Abstract**

To provide a refrigerator which is excellent in the strength of a heat insulating box body. A refrigerator according to the embodiment has a heat insulating box body in which a storage compartment is formed inside, in which the heat insulating box body includes a heat insulating wall body having a vacuum heat insulating panel and a wall material covering at least part of the vacuum heat insulating panel, the wall material includes an inner plate arranged inside of the box and an outer plate arranged outside thereof when forming the heat insulating box body, and at least one of the inner plate and the outer plate is adhered to the vacuum heat insulating panel by a reactive hot-melt adhesive.

## Description

### Technical Field

An embodiment of the present invention relates to a refrigerator.

### Background Art

In related art, a heat insulating member of a refrigerator is formed by a vacuum heat insulating panel having an excellent insulation effect, and the heat insulating member is adhered to an outer surface of a box-shaped inner box.

However, there is a problem that an assembly work of adhering the vacuum heat insulating panel to the inner box is troublesome as the inner box has a three dimensional shape. Accordingly, there has been disclosed a refrigerator in which plural heat insulating wall bodies provided with vacuum heat insulating panels inside are combined, and the two heat insulating wall bodies are connected and fixed by using a fixing means to be the box shape (PTLs 1 and 2).

However, the vacuum heat insulating panel forming each heat insulating wall body is adhered to a plate as a wall material in the refrigerator having the above structure, and when a relatively high load is applied to the plate, there is a danger that the vacuum heat insulating panel peels off from the plate and that it becomes difficult to maintain the box body.

### Citation List

### Patent Literature

PTL 1: JP-2011-130120
PTL 2: JP-2011-133181

### Summary of Invention

### Technical Problem

In view of the above, an object of the present invention is to provide a refrigerator with improved strength as compared with related art, in which peeling between the vacuum heat insulating panel and the plate does not occur even when the relatively high load is applied to the plate adhered to the vacuum heat insulating panel.

### Solution to Problem

According to an embodiment of the present invention, there is provided a refrigerator having a heat insulating box body in which a storage compartment is formed inside, in which the heat insulating box body includes a heat insulating wall body having a vacuum heat insulating panel and a wall material covering at least part of the vacuum heat insulating panel, the wall material includes an inner plate arranged inside of the box and an outer plate arranged outside thereof when forming the heat insulating box body, and at least one of the inner plate and the outer plate is adhered to the vacuum heat insulating panel by a reactive hot-melt adhesive.

### Brief Description of Drawings

[Fig. 1] Fig. 1 is a perspective view of a refrigerator showing an embodiment of the present invention.
[Fig. 2] Fig. 2 is a perspective view showing the inside of the refrigerator of Fig. 1 from a right direction.
[Fig. 3] Fig. 3 is an exploded side view of a heat insulating box body.
[Fig. 4] Fig. 4 is a horizontal cross-sectional view of the heat insulating box body.
[Fig. 5] Fig. 5 is an exploded perspective view of a left-wall heat insulating panel.
[Fig. 6] Fig. 6 is a partial cross-sectional view showing an example in which an outer plate has a flange.
[Figs. 7] Figs. 7 are schematic cross-sectional views showing processes of adhering the outer plate and the inner plate to both surfaces of a vacuum heat insulating panel.
[Fig. 8] Fig. 8 is a vertical cross-sectional view of the left-wall heat insulating panel to which a shelf receiving member is attached.
[Fig. 9] Fig. 9 is a vertical cross-sectional view showing a shelf receiving portion according to another embodiment and a shelf board placed thereon.
[Fig. 10] Fig. 10 is a vertical cross-sectional view showing the left-wall heat insulating panel to which a support member of a partition plate is attached.
[Fig. 11] Fig. 11 is a vertical cross-sectional view showing the left-wall heat insulating panel to which a rail attaching member is attached.
[Fig. 12] Fig. 12 is a cross-sectional view of a door having a pull knob.
[Fig. 13] Fig. 13 is a graph showing the variation with time of the shear adhesion strength in a curing process of a reactive hot-melt adhesive and a related-art hot-melt adhesive.
[Fig. 14] Fig. 14 is a graph showing the variation with time of the shear strength of the reactive hot-melt adhesive after the curing.
[Fig. 15] Fig. 15 is a graph showing the variation with time of the peeling strength of the reactive hot-melt adhesive with respect to a vacuum heat insulating panel surface.
[Fig. 16] Fig. 16 is a schematic cross-sectional view showing a measuring method of the peeling strength of the reactive hot-melt adhesive with respect to the vacuum heat insulating panel surface.

### Description of Embodiments

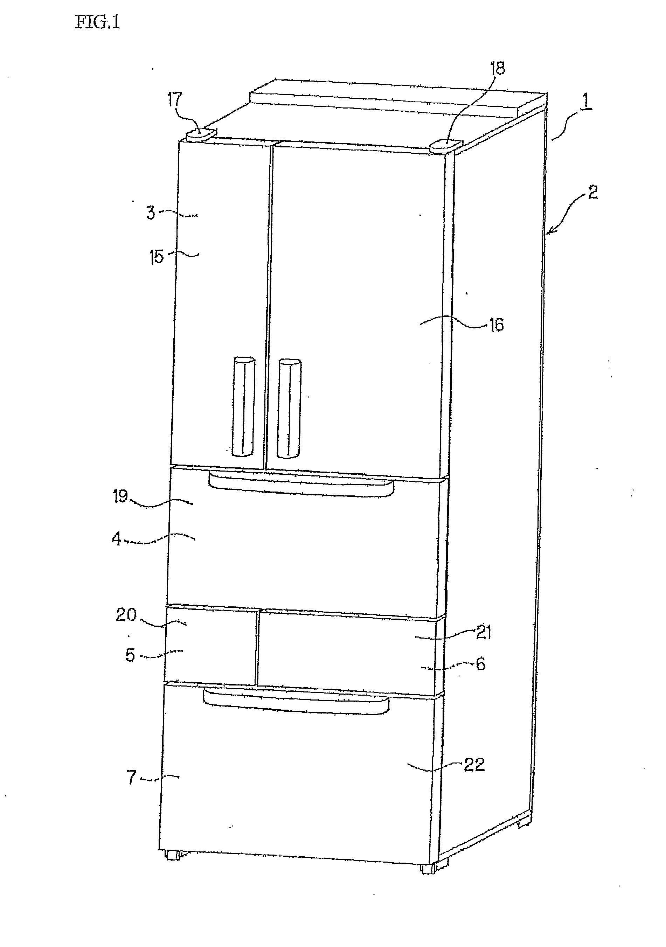

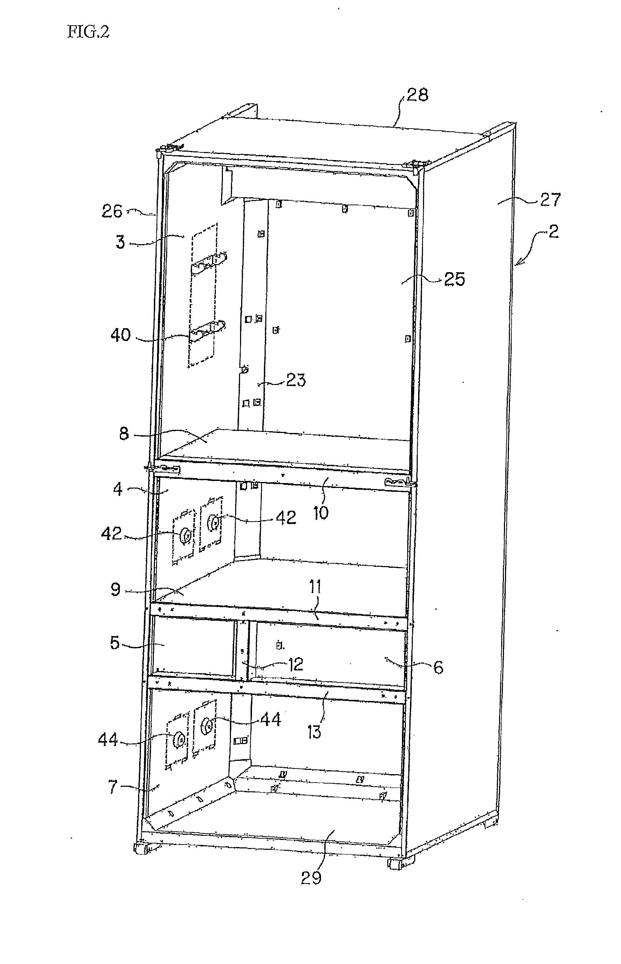

An embodiment of the present invention will be explained with reference to the drawings. Fig. 1 shows an appearance of a refrigerator 1 according to an embodiment and Fig. 2 shows an appearance of a heat insulating box body 2 forming a cabinet of the refrigerator 1. Inside the heat insulating box body 2, a refrigerator compartment 3 and a vegetable compartment 4 are sequentially provided from the above, an ice-making compartment 5 and a small freezing compartment 6 are provided below the vegetable compartment 4 side by side and a main freezing compartment 7 is provided in the lowest part. The refrigerator compartment 3, the vegetable compartment 4, the ice-making compartment 5, the small freezing compartment 6 and the main freezing compartment 7 respectively form storage compartments. Among them, the temperature inside the refrigerator compartment 3 and the vegetable compartment 4 is controlled to be a refrigeration temperature of, for example, about 1°C to 5°C. As the refrigerator compartment 3 and the vegetable compartment 4 are storage compartments in a refrigeration temperature range as described above, these compartments are partitioned by, for example, a partition plate 8 (corresponding to a partition portion) made of a synthetic resin. The temperature inside the ice-making compartment 5, the small freezing compartment 6 and the main freezing compartment 7 is controlled to be a freezing temperature of, for example, -18°C or less, and these compartments are storage compartments in a freezing temperature range. The vegetable compartment 4 in the refrigeration temperature range and the ice-making compartment 5 as well as the small freezing compartment 6 in the freezing temperature range are partitioned in a vertical direction by a heat insulating partition wall 9 (corresponding to a member traversing inside the insulating box body) having a heat insulating property.

As shown in Fig. 2, a front partition portion 10 positioned in front of the partition plate 8 and extending in the horizontal direction is provided and a front partition portion 11 positioned in front of the heat insulating partition wall 9 and extending in the horizontal direction is provided in a front part of the heat insulating box body 2. Also in the front part of the heat insulating box body 2, a front partition portion 12 positioned between the ice-making compartment 5 and the small freezing compartment 6 and extending in the vertical direction is provided and a front partition portion 13 positioned between the ice-making compartment 5 as well as the small freezing compartment 6 and the main freezing compartment 7 and extending in the horizontal direction is provided.

The front of the refrigerator compartment 3 is opened and closed by two pieces of doors 15, 16. The doors 15, 16 are double doors rotating in a back and forth direction around hinge portions 17, 18 provided at right and left both end portions of the heat insulating box body 2. The front of the vegetable compartment 4 is opened and closed by a pullout door 19. On the reverse side of the door 19, a not-shown vegetable storage container is provided. The front of the ice-making compartment 5 is opened and closed by a pullout door 20. A not-shown ice-making device is provided in the ice-making compartment 5, and a not-shown ice storage container is provided on the reverse side of the door 20. The front of the small freezing compartment 6 is opened and closed by a pullout door 21. A not-shown storage container is provided on the reverse side of the door 21.

The main freezing compartment 7 is also opened and closed by a pullout door 22. A not-shown storage container is provided on the reverse side of the door 22.

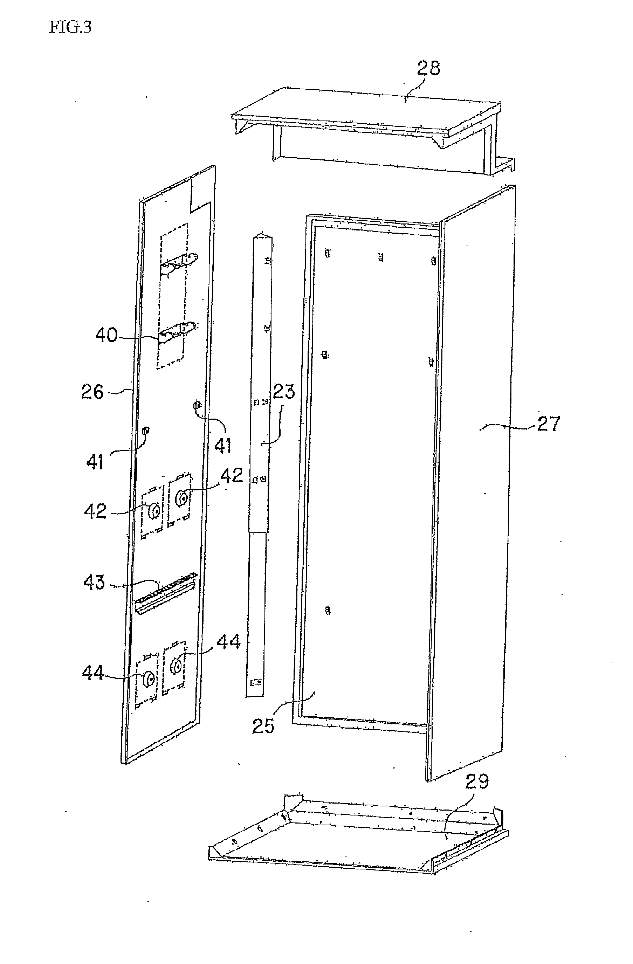

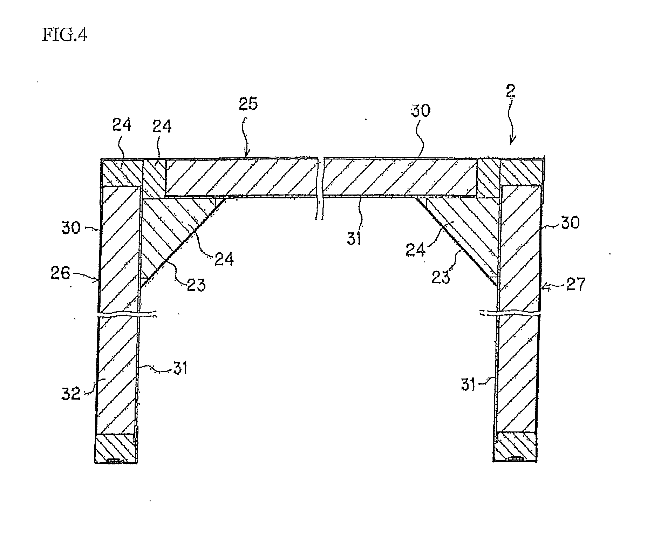

The heat insulating box body 2 is formed in a box shape with an opening in the front by combining a back-wall heat insulating panel 25 forming a back-wall, a left-wall heat insulating panel 26 forming a left wall, a right-wall heat insulating panel 27 forming a right wall, a ceiling-wall heat insulating panel 28 forming a ceiling wall and a bottom-wall heat insulating panel 29 forming a bottom wall, which respectively correspond to heat insulating wall bodies as shown in Fig. 3 and Fig. 4.

The back-wall heat insulating panel 25 and the left-wall heat insulating panel 26 are connected and fixed by using a fixing means 23 corresponding to a connecting portion at a corner portion of a left back part. Connecting portions respectively connecting the heat insulating panels 25, 26 and 27 are filled with resin foams 24.

The back-wall heat insulating panel 25 and the right-wall heat insulating panel 27 are also connected and fixed by using a fixing means (not shown) similar to the above fixing means 23 at a corner portion of a right back part. The front of the left-wall heat insulating panel 26 and the front of the right-wall heat insulating panel 27 are connected by the front partition potions 10, 11 and 13. The heat insulating box body 2 is reinforced by these front partition potions 10, 11 and 13.

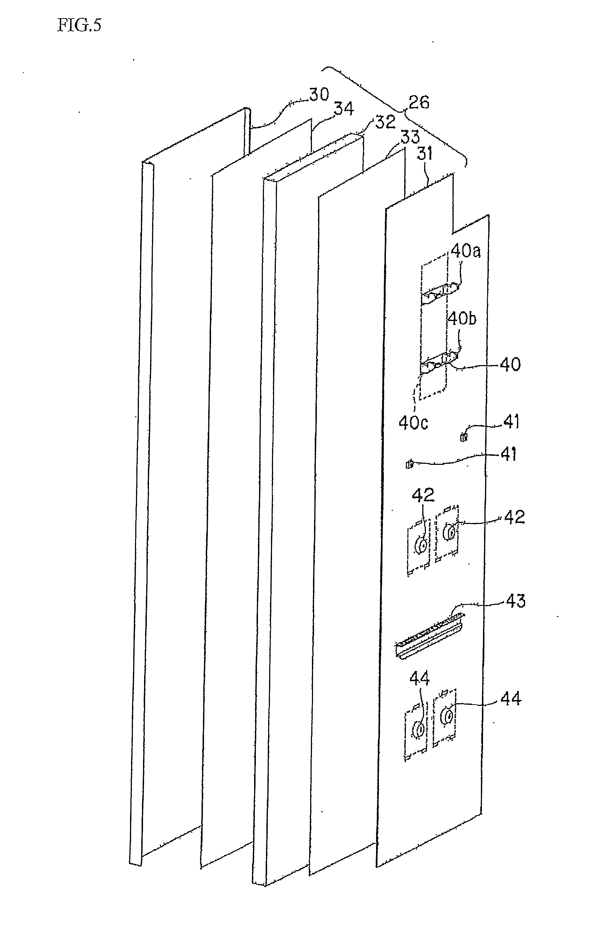

As schematic structures of these heat insulating panels 25 to 29 are the same, the left-wall heat insulating panel 26 will be explained as a representative. As shown in Fig. 5, the left-wall heat insulating panel 26 includes an outer plate 30 made of a metal plate for an outer box, an inner plate 31 formed by, for example, a sheet member made of a synthetic resin for an inner box and a panel-shaped vacuum heat insulating panel 32 as a heat insulating material arranged in a state of being sandwiched between the outer plate 30 and the inner plate 31.

A shelf receiving member 40 as a protruding member, a partition plate attaching member 41, a first rail attaching member 42, a partition wall attaching member 43 and a second rail attaching member 44 are attached to the inner plate 31 as shown in Fig. 5, which is adhered to the vacuum heat insulating panel 32 in a state of integrally including these members.

Also in the inner plate 31 of the right-wall heat insulating panel 27 opposite to the left-wall heat insulating panel 26, though not shown, the shelf receiving member 40, the partition plate attaching member 41, the first rail attaching member 42, the partition wall attaching member 43 and the second rail attaching member 44 are provided so as to be opposite to the shelf receiving member 40, the partition plate attaching member 41, the first rail attaching member 42, the partition wall attaching member 43 and the second rail attaching member 44 of the left-wall heat insulating panel 26.

The vacuum heat insulating panel 32 is a panel in which, for example, thin glass fibers are made to be a mat-shape and used as a core material, the core material is housed in a bag having a gas barrier property, the inside of the bag is vacuum exhausted and an opening end portion of the bag is sealed to form a sealed portion to thereby maintain the inside in a vacuum and pressure-reduced state, which has a thin and low heat conductivity (high heat insulating property).

The bag of the vacuum heat insulating panel 32 has a first film covering a first surface of the core material and a second film covering a second surface opposite to the first surface of the core material, though not limited to this. In these films, the first film has a five-layer structure including a PE (polyethylene) layer to be an inside welding layer, an EVOH (an ethylene vinylalcohol copolymer resin) layer provided with a vapor deposited aluminum layer (a vapor deposited metal layer), a nylon layer and a PET (a polyethylene terephthalate) layer to be a surface layer on the outermost side. The second film has a four-layer structure including the PE layer to be the inside welding layer, an aluminum foil layer (a metal foil layer), the nylon layer and the PET layer to be the surface layer on the outermost side.

The vacuum heat insulating panel 32 is in the state of being sandwiched between the inner plate 31 and the outer plate 30 by adhering and fixing a surface to a reverse face of the inner plate 31 by an adhesive 33 as well as adhering and fixing a surface opposite to the above-mentioned surface to an inner surface of the outer plate 30 by an adhesive 34 as shown in Fig. 5. The PET layer as the surface layer on the outermost side of the vacuum heat insulating panel 32 will be a bonding surface. It has been common in related art that the outer plate is adhered to the vacuum heat insulating panel by a hot-melt adhesive and the inner plate is adhered to the vacuum heat insulating panel by a liquid solution-type urethane-based adhesive, however, in the embodiment of the present invention, a reactive hot-melt adhesive is used for at least one of the adhesives 33, 34, and it is preferable that both the outer plate and the inner plate are adhered to the vacuum heat insulating panel by using the reactive hot-melt adhesive in terms of strength.

In the related-art adhesive, there is a danger that the peeling between the vacuum heat insulating panel and the plate occurs and it becomes difficult to maintain the box body when the load is applied to the inner plate or the outer plate adhered to the heat insulating member such as the vacuum heat insulating panel, however, the reactive hot-melt adhesive has the adhesion strength such as a shear adhesion strength and a tensile strength is drastically higher than a non-reactive hot-melt adhesive in related art, therefore, there is little danger that the peeling occurs. In particular, the shear strength becomes remarkably excellent.

Additionally, though the related-art hot-melt adhesive becomes soft when the temperature is increased to approximately 50°C or more and it is sometimes difficult to maintain adhesion, the reactive hot-melt adhesive can maintain necessary adhesive even in a high temperature range of 50°C or more, the adhesive is highly useful under a condition of climate warming.

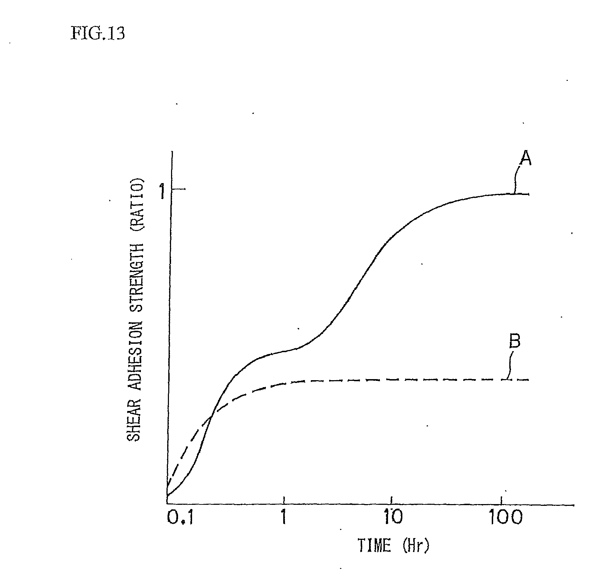

The reactive hot-melt adhesive is applied in a heated and molten state in the same manner as the related-art holt-melt adhesive, and is cooled and solidified while pressed onto an adhered material. Fig. 13 is a graph showing the variation with time of the shear adhesion strength (JIS K6850) in a curing process of the reactive hot-melt adhesive and the related-art hot-melt adhesive. "A" shows the shear adhesion strength of the reactive hot-melt adhesive and "B" shows the shear adhesion strength of the related-art hot-melt adhesive respectively, which are displayed as relative values by setting the maximum value of measured results of A to 1. As can be seen from the graph, the shear adhesion strength is increased for about one hour from the start of adhesion by cooling and solidification in both adhesives, and the strength of the reactive hot-melt adhesive is almost the same as the related-art hot-melt adhesive when the cooling and solidification are completed. However, the shear adhesion strength of the related-art hot-melt adhesive B will be approximately a fixed value after that, whereas in the reactive hot-melt adhesive A, the shear adhesion strength continues increasing with the time lapse and becomes remarkably higher than the related-art hot-melt adhesive B after several dozen hours. This is because a reactive group reacts with moisture in the air to cause a cross-linking reaction, as a result, the high adhesion strength and heat resistance as described above can be obtained.

As a specific example of the reactive hot-melt adhesive, a polyurethane-based adhesive, a polyolefin-based adhesive and the like can be cited, and the polyurethane-based hot-melt adhesive is preferable because of the adhesion strength, the easiness of acquisition and so on.

The polyurethane-based hot-melt adhesive contains a urethane prepolymer having an isocyanate group as the main component, which is cooled and solidified while keeping the isocyanate group unreacted when being molten and applied in the same manner as the normal hot-melt adhesive. After that, the isocyanate group reacts with moisture included in the air or the adhered material to cause a chain-growth reaction and the cross-linking reaction, as a result, the adhesive having remarkably excellent adhesion and heat resistance as compared with related-art adhesives can be obtained.

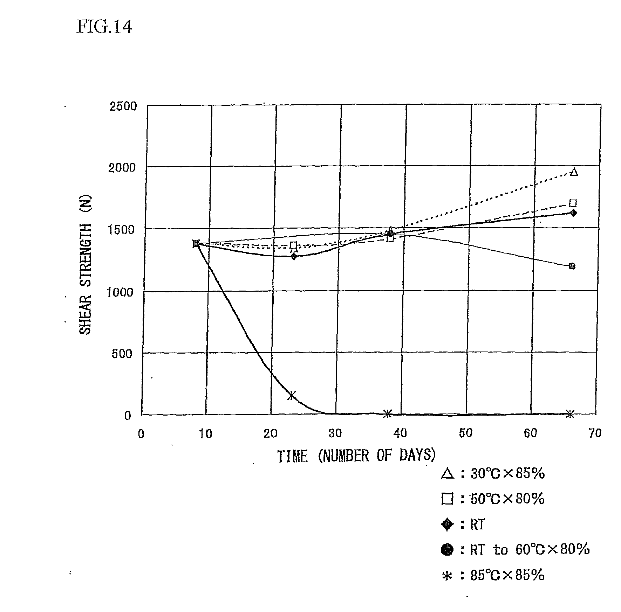

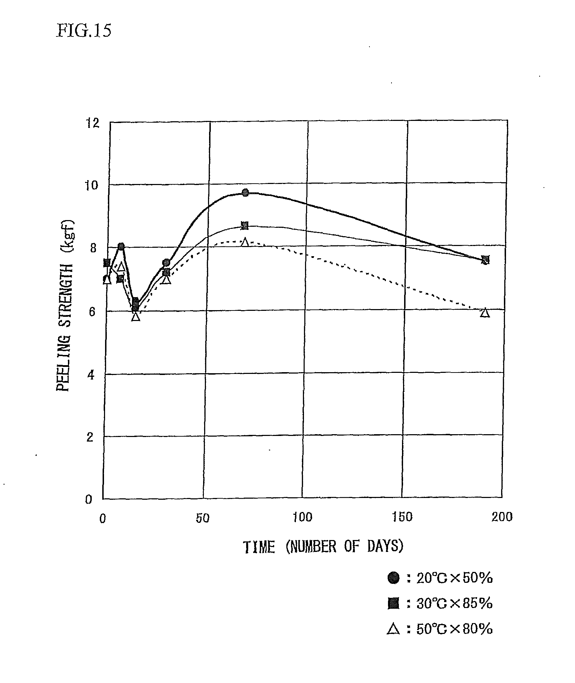

As the adhesion strength of the polyurethane-based hot-melt adhesive, results obtained by measuring the shear strength and the peeling strength on the vacuum heat insulating panel surface are shown in Fig. 14 and Fig. 15.

Fig. 14 shows the variation with time of the shear strength (break power, unit : N) of the polyurethane-based hot-melt adhesive under different temperature and moisture conditions. The shear strength was measured in accordance with JIS K6850. "RT" shows measurement results of a specimen left in a laboratory at room temperature. For example, "30°Cx85%" shows a measurement result of a specimen placed in an environmental test unit set in temperature and moisture conditions of temperature 30°C and moisture 85%. "RT to 60°Cx80%" shows a measurement result of a specimen placed in the environmental test unit set in temperature 60°C and moisture 80% after being left for 38 days at room temperature. As can be seen from the results shown in the graph, the adhesion strength was reduced just after the start of the test in the specimen placed under a condition of temperature 85°C and moisture 85%, however, a desired strength can be maintained in other conditions including, in addition to the case of room temperature and the case of temperature 30°C and moisture 85%, a case where 60 days or more has passed in a condition of temperature 50°C and moisture 80%, and it has been confirmed that a certain degree of strength can be maintained even when the condition is changed to temperature 60°C and moisture 80% after being left at room temperature.

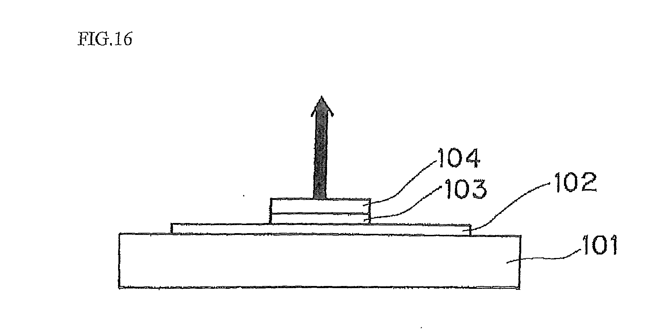

Fig. 15 shows the variation with time of the peeling strength (peeling force, unit : kgf) obtained when an adhered object of the vacuum heat insulating panel and the polyurethane-based hot-melt adhesive is placed under different temperature and moisture conditions. That is, measurement results obtained after specimens in which a polyurethane-based hot-melt adhesive 102 is applied to the surface of a vacuum heat insulating panel 101 are placed in environmental test unit sets respectively set to given temperature and moisture conditions shown in legends in the same manner as the graph in Fig. 14. The peeling strength was measured in accordance with JIS K6854 in a manner shown in Fig. 16. That is, a metal fitting 104 is attached to the surface of the vacuum heat insulating panel 101 by using an adhesive 103 and the metal fitting is pulled in a direction of an arrow to check the strength in which an interface between the hot-melt adhesive 102 and the vacuum heat insulating panel 101 is peeled. Also according to the results shown in this graph, it has been confirmed that the strength can be maintained for a long period of time under the condition of temperature 50°C and moisture 80%.

The reactive hot-melt adhesive is applied to the adhered object after being molten in the same manner as the normal hot-melt adhesive as described above. The method of application is not limited, but the adhesive is normally applied by a roll coater and the like.

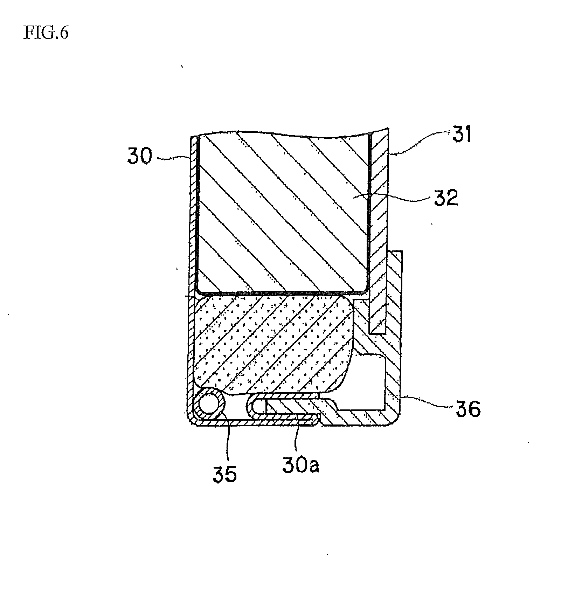

Incidentally, the inner wall and the outer wall of the heat insulating wall body is not always a flat shape, but the outer plate 30 may have, for example, a flange 30a as shown in Fig. 6. In the example shown in Fig. 6, a gap between the outer plate 30 and the inner plate 31 is sealed with a sealing member 36, and a symbol 35 denotes a pipe. When at least one of the outer plate 30 and the inner plate 31 has the flange protruding to the vacuum heat insulating panel 32 side as described above, a length of a protrusion of the flange is set to be shorter than a thickness of the vacuum heat insulating panel, thereby applying the adhesive also to a surface to be adhered later by using the roll coater when applying the adhesive without being interfered by the flange of the plate which has been already adhered.

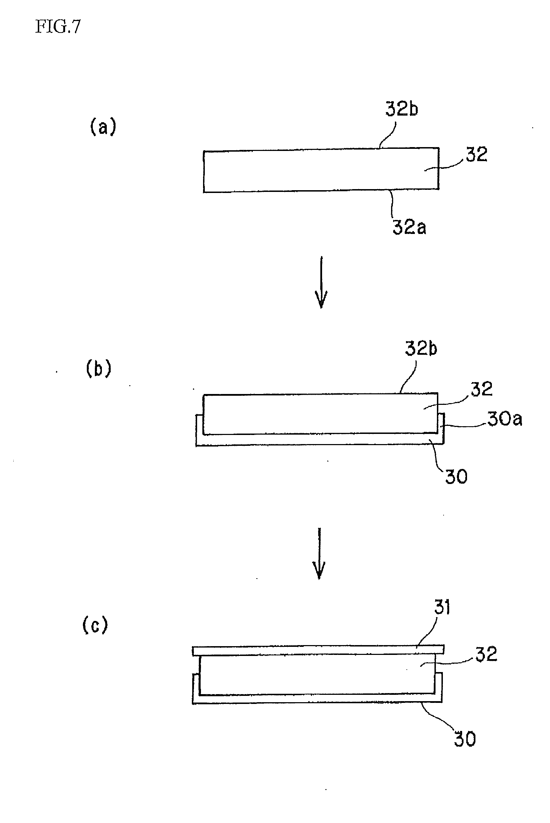

That is, as shown in Figs. 7, in the case where the adhesive is applied to a undersurface 32a of the vacuum heat insulating panel 32 in a process (a) and the outer plate 30 in which a length of the protrusion of the flange 30a is shorter than the thickness of the vacuum heat insulating panel is adhered to the undersurface of the vacuum heat insulating panel in a process (b), the adhesive can be sequentially applied also to an upper surface 32b of the vacuum heat insulating panel by the roll coater, and the inner plate 31 can be placed and adhered onto the upper surface of the vacuum heat insulating panel in a process (c).

When the length of the flange of the previously-adhered plate protruding to the vacuum heat insulating panel side is longer than the thickness of the vacuum heat insulating panel, which is different to the above case, it is difficult to apply the adhesive by the roll coater and the like as described above. The application is performed by using a spray and the like in such case.

As the adhesion force remarkably higher than related-art examples can be obtained as described above by applying the embodiment of the present invention, the embodiment is particularly useful in the case where the high load is applied to the inner plate or the outer plate.

That is, partition members such as shelf boards and partition plates partitioning the space in the vertical direction are normally provided in the storage compartments of the refrigerator, therefore, support members for the partition members such as the shelf receiving member and the partition plate attaching member are provided as shown in Fig. 2, Fig. 8, Fig. 9 and Fig. 10. When a heavy object is put on the partition member at the time of using the refrigerator, the load is applied to the support member and the peeling between the inner plate and the vacuum heat insulating panel may occur, however, these problems can be solved by the present invention.

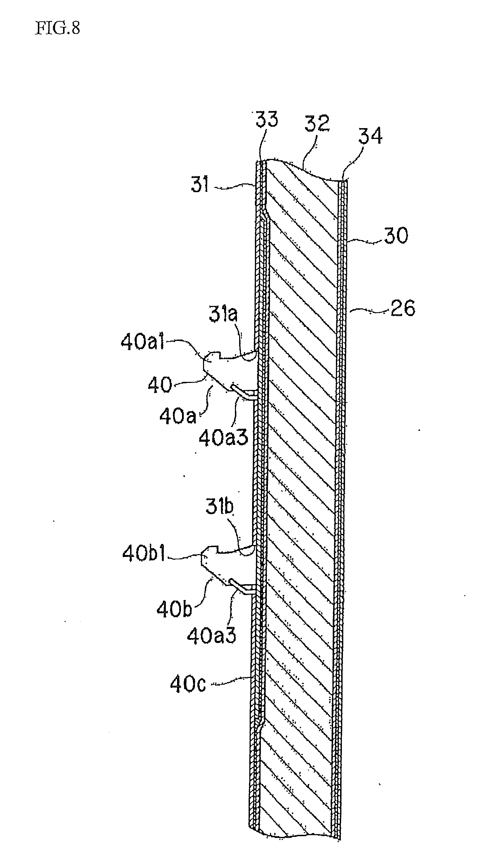

Fig. 8 shows the shelf receiving member 40 attached to the heat insulating panel 26. In Fig. 8, the receiving member 40 is made of, for example, a metal plate, including plural, for example, upper and lower two protrusions 40a and 40b and a sandwiched portion 40c. The upper protrusion 40a includes a pair of right and left protruding pieces 40a1, 40a2 and an intermediate open-up edge portion 40a3. The protruding pieces 40a1 and 40a2 have a hook shape. The lower protrusion 40b has the same structure as the protrusion 40a. The sandwiched portion 40c extends in the vertical direction from one ends (base ends) of the protrusions 40a, 40b, and the plural protrusions 40a, 40b are integrally connected by the sandwiched portion 40c. Then, holes 31a, 31b are formed on the inner plate 31 separately in the vertical direction. Before assembling the left-wall heat insulating panel 26, the protrusions 40a, 40b are inserted from the reverse face of the inner plate 31 (reverse face in the case where a surface inside the refrigerator is regarded as the front face) into the holes 31a, 31b to be protruded to the front side of the inner plate 31, and the sandwiched portion 40c is adhered to a peripheral portion of the hole portions 31a, 31b on the reverse face of the inner plate 31. Then, a reverse face of a united object of the sandwiched portion 40c and the inner plate 31 is adhered to the vacuum heat insulating panel 32. In the state where the left-side wall heat insulating panel 26 has been assembled, the sandwiched portion 40c is sandwiched between the inner plate 31 and the vacuum heat insulating panel 32. The shelves are placed on the hook-shaped protrusions 40a, 40b of the shelf receiving members 40.

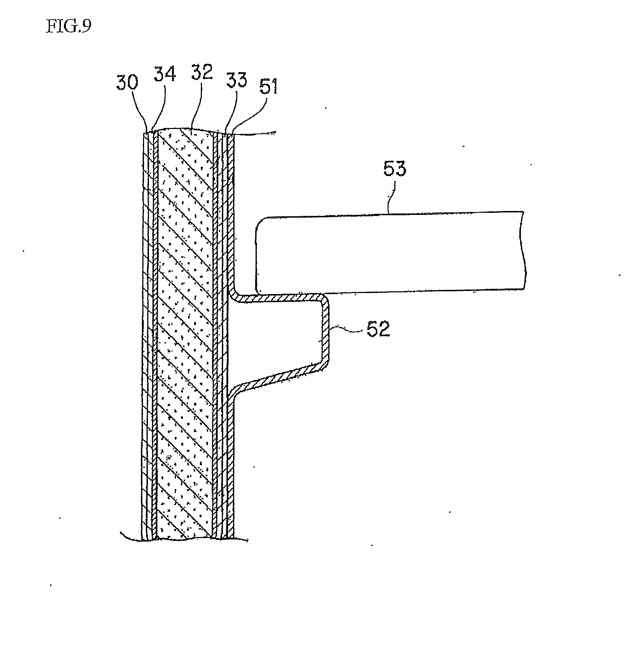

Fig. 9 shows a shelf receiving member according to another example and a part of a shelf placed thereon. In the example, a shelf receiving portion 52 is integrally formed in an inner plate 51. The shelf receiving portion 52 has an approximately C-shape in cross section, which inclines slightly upward toward the storage compartment in the lower side. The inner plate 51 is adhered to one surface of the vacuum heat insulating panel 32 through the reactive hot-melt adhesive 33 in the same manner as described above, and the outer plate 30 is adhered to the other surface through the reactive hot-melt adhesive 34. A placing shelf 53 capable of being detached is placed so as to partition the storage compartment in the vertical direction.

It is also possible to attach a reinforcing member such as a reinforcing board to, for example, the reverse face of the inner plate and so on according to need in order to prevent fall-off of the shelf receiving member 40, deformation/break and so on of the shelf receiving portion 51.

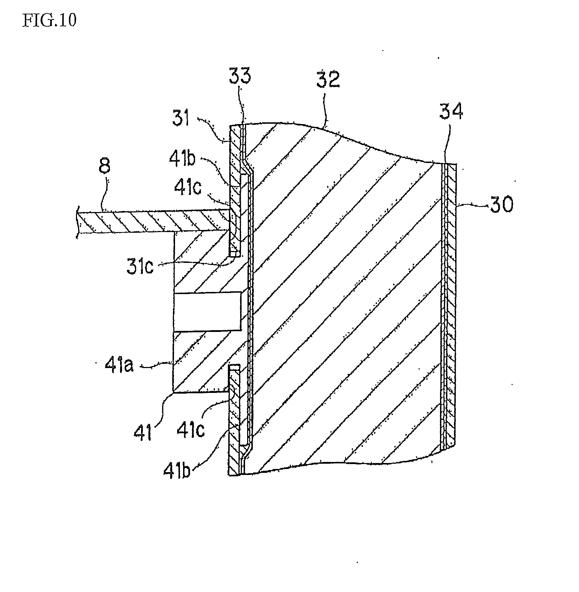

Fig. 10 shows the partition plate attaching member 41 attached to the heat-insulating panel 26. The partition plate attaching member 41 is made of a synthetic resin, including a protrusion 41a and sandwiching portions 41b extending in the vertical direction from one end thereof. Then, groove portions 41c having approximately the same front and back width as the plate thickness of the inner plate 31 are formed on one end of the protrusion 41a. A hole portion 31c is formed in the inner plate 31 and a long slit 31d which is long in the vertical direction is further formed continuously on the right side of the hole portion 31c. In order to attach the partition plate attaching member 41 to the inner plate 31, the upper and lower sandwiching portions 41b of the partition plate attaching member 41 are inserted from the left end of the slit 31d in the left direction at the position on the front side of the inner plate 31 before assembling the left-wall heat insulating panel 26. The groove portions 41c, 41c of the partition plate attaching member 41 fit to upper and lower edge portions of the hole portion 31c. Also at this time, the sandwiching portions 41b are adhered to a peripheral portion of the hole portion 31c for the partition plate attaching member of the inner plate 31 by applying the adhesive on the reverse surface of the inner plate 31 in advance.

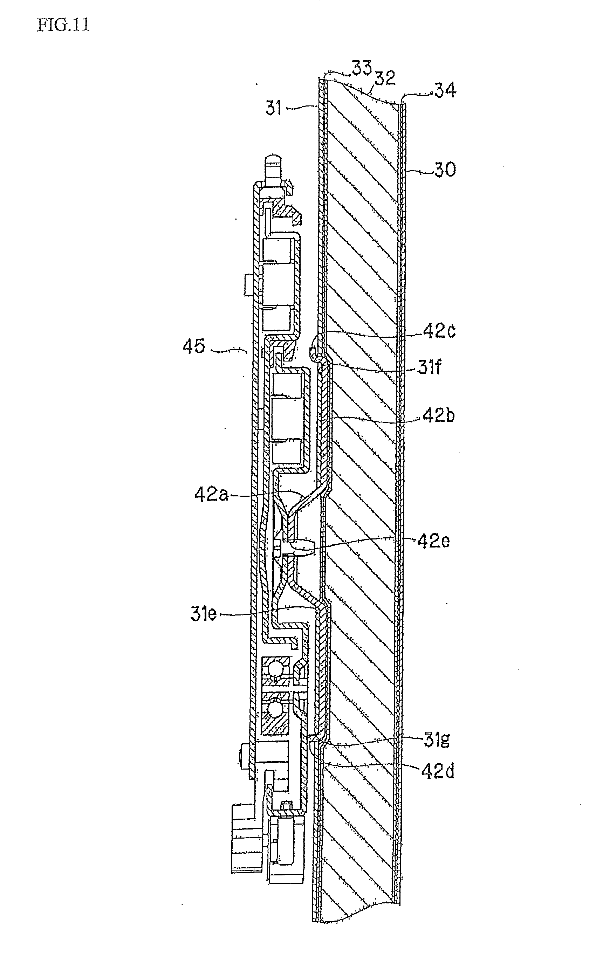

Also in the case where a rail attaching member for attaching a rail for moving a container is provided as shown in Fig. 11 in addition to the support members of the partition members, the high load may be applied in the same manner, but the strength in which peeling does not occur can be obtained even in such case.

In Fig. 11, the rail attaching member 42 is made of, for example, a metal plate, including a protrusion 42a having an approximately cylindrical shape (cylindrical shape close to a bowl shape) and a sandwiched portion 42b extending to the periphery from one end of the protrusion 42a. Furthermore, an engaging portion 42c having an L-shape with respect to an upper direction is formed at a central position of an upper part of the sandwiched portion 42b, and two engaging portions 42d in a form of protruding inside the refrigerator are formed at right and left two positions at a lower part. A screw hole 42e which is a hole is included in the protrusion 42a. In the inner plate 31, a hole portion 31e to which the protrusion 42a is inserted to be protruded is formed as well as an engaging hole portion 31f is formed at a position at an upper part of the hole portion 31e and engaging hole portions 31g are formed at two positions at a lower part. In order to attach the rail attaching member 42 to the inner plate 31, the protrusion 42a is inserted from the reverse surface of the inner plate 31 into the hole portion 31e to be protruded to the front side of the inner plate 31, the engaging portion 42c at the upper part is inserted into the engaging hole portion 31f at the upper part to be engaged, the engaging portions 42d at the lower part are inserted into the engaging holes 31g at the lower part to be engaged, and the sandwiched portion 42b is adhered to the reverse surface of the inner plate 31 before assembling the left-wall heat insulating panel 26. In the state where the left-wall heat insulating panel 26 has been assembled, the sandwiched portion 42b is sandwiched between the inner plate 31 and the vacuum heat insulating panel 32. A rail 45 extending back and forth is screwed into the screw hole 42e in the protrusion 42a of the rail attaching member 42. The rail 45 guides the movement of a support frame (not shown) attached to the reverse side of the door 19 of the vegetable compartment 4 in the back and forth direction.

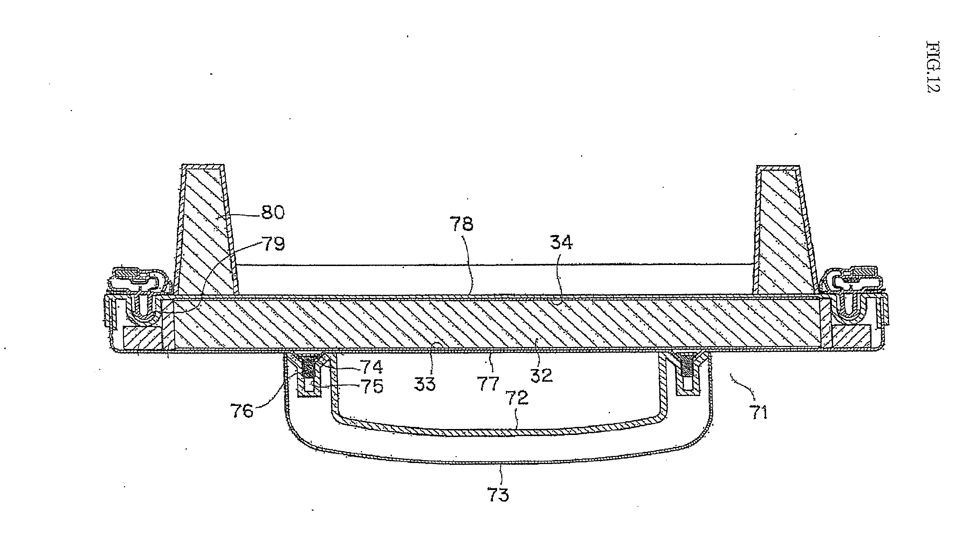

Furthermore, in the case of the door, a pull knob (handle) is provided on the outer plate and a door pocket is provided in the inner plate as shown in Fig. 12, and it is possible to form the tough door in which peeling does not occur due to the load applied to them. Fig. 12 shows a structure of a freezer door 22, including a pull knob ornament 73, a pull knob base 72, a door outer plate 77, the adhesive 33, the vacuum heat insulating panel 32, the adhesive 34, a door inner plate 78 and a heat insulating material 80 sequentially from the front. The pull knob base 72 includes attaching holes 74 and screw receiving holes 75, which is attached to the door outer plate 77 by screws 76.

Gasket attaching portions 79 are formed near an outer-peripheral edge portion of the door inner plate 78. The gasket attaching portions 79 have a slot shape, which protrude to the door outer plate 77 side (front direction) so that openings direct to the back direction.

The embodiment of the present invention has been cited as an example and does not limit claims. These novel embodiment can be achieved in various other modes, and various omission, replacement and modifications may occur within a scope not departing from the gist of the invention. These embodiment and modifications thereof are included in claims and the gist thereof, as well as included in the inventions described in claims and in an equivalent range of the inventions.

### Reference Signs List

In the drawings, 1 denotes a refrigerator, 2 denotes a heat insulating box body, 3 denotes a refrigerator compartment (storage compartment), 4 denotes a vegetable compartment (storage compartment), 5 denotes an ice-making compartment (storage compartment), 6 denotes a small freezing compartment (storage compartment), 7 denotes a main freezing compartment (storage compartment), 8 denotes a partition plate (partition portion), 9 denotes a heat insulating partition wall (member traversing inside the insulating box body), 23 denotes a fixing means (connecting portion), 26 denotes a left-wall heat insulating panel (heat insulating wall body, side wall), 27 denotes a right-wall heat insulating panel (heat insulating wall body, side wall), 30 denotes an outer plate, 31 denotes an inner plate, 32 denotes a vacuum heat insulating panel, 33 denotes an adhesive, 34 denotes an adhesive, 40 denotes a shelf receiving member (protruding member), 41 denotes partition plate attaching member (protruding member), 42 denotes a first rail attaching member (protruding member), 43 denotes a partition wall attaching member (protruding member), 44 denotes a second rail attaching member (protruding member), 51 denotes an inner plate, 52 denotes a shelf receiving portion, 53 denotes a shelf, 61 denotes a fixing means (connecting portion), 62 denotes an attaching member (protruding member), 72 denotes a pull knob base, 73 denotes a pull knob ornament, 76 denotes a screw, 77 denotes a door outer plate and 78 denotes a door inner plate.

## Claims

1. A refrigerator comprising:
a heat insulating box body in which a storage compartment is formed inside,
wherein the heat insulating box body includes a heat insulating wall body having a vacuum heat insulating panel and a wall material covering at least part of the vacuum heat insulating panel,
the wall material includes an inner plate arranged inside of the box and an outer plate arranged outside thereof when forming the heat insulating box body, and
at least one of the inner plate and the outer plate is adhered to the vacuum heat insulating panel by a reactive hot-melt adhesive.

2. The refrigerator according to claim 1,
wherein the reactive hot-melt adhesive is made of a urethane prepolymer having an isocyanate group.

3. The refrigerator according to claim 1 or 2,
wherein the vacuum heat insulating panel is sandwiched between the outer plate and the inner plate, and adhered to the outer plate and the inner plate respectively to form the heat insulating wall body.

4. The refrigerator according to any one of claims 1 to 3,
wherein the heat insulating box body is formed by combining the plural heat insulating wall bodies.

5. The refrigerator according to any one of claims 1 to 4,
wherein at least one of the outer plate and the inner plate includes a flange protruding to the vacuum heat insulating panel side, and
a length of a protrusion is shorter than a thickness of the vacuum heat insulating panel.

6. The refrigerator according to any one of claims 1 to 5,
wherein a support member for a partition member partitioning a space in the storage compartment in the vertical direction is provided in the inner plate.

7. The refrigerator according to any one of claims 1 to 6,
wherein a rail attaching member for attaching a rail for moving a container is provided in the inner plate.
